# EUROPEAN PATENT SPECIFICATION

(11) **EP 1 367 504 B1**
(45) Date of publication and mention of the grant of the patent: **16.04.2008**
(21) Application number: 02011742.0
(22) Date of filing: 27.05.2002
(51) Int. Cl.: G06F 17/30

(54) **Method and computer system for indexing structured documents**
Verfahren und Computersystem zum Indexieren strukturierter Dokumente
Méthode et système informatique pour l'indexage de documents structurés

(43) Date of publication of application: 03.12.2003
(73) Proprietor: SAP AG, 69190 Walldorf (DE)
(72) Inventor: Özgen, Markus, 14641 Paulinenaue (DE)
(74) Representative: Rocke, Carsten

(56) References cited:
- LENNARTZ S: "Ich bin wichtig!" C'T MAGAZIN FÜR COMPUTERTECHNIK, no. 23, 8 November 1999 (1999-11-08), pages 180-186, XP002225482
- MAULDIN M: "Spidering BOF Report" INTERNET, [Online] 16 June 2001 (2001-06-16), XP002225483 Retrieved from the Internet: <URL:http://web.archive.org/web/2001061607 0928/http://www.robotstxt.org/wc/meta-note s.html> [retrieved on 2002-12-17]
- TAN K F ET AL: "FIBEX, an extractor enabling querying of documents using SQL" DATABASE AND EXPERT SYSTEMS APPLICATIONS, 1998. PROCEEDINGS. NINTH INTERNATIONAL WORKSHOP ON VIENNA, AUSTRIA 26-28 AUG. 1998, LOS ALAMITOS, CA, USA,IEEE COMPUT. SOC, US, 26 August 1998 (1998-08-26), pages 108-112, XP010296641 ISBN: 0-8186-8353-8
- WHITEHEAD E J ET AL: "WebDAV: IEFT standard for collaborative authoring on the Web" IEEE INTERNET COMPUTING, IEEE SERVICE CENTER, PISCATAWAY, NJ, US, vol. 2, no. 5, September 1998 (1998-09), pages 34-40, XP002199892 ISSN: 1089-7801
- W3C: "XML Path Language (XPath) Version 1.0" INTERNET, [Online] 16 November 1999 (1999-11-16), XP002225484 Retrieved from the Internet: <URL:http://www.w3.org/TR/1999/REC-xpath-1 9991116> [retrieved on 2002-12-17]
- KASUKAWA T. ET AL: 'A new method for maintaining semi-structured data described in XML' COMMUNICATIONS, COMPUTERS AND SIGNAL PROCESSING, 1999 IEEE PACIFIC RIM CONFERENCE ON VICTORIA, BC, CANADA 22-24 AUG. 1999, PISCATAWAY, NJ, USA,IEEE, US 22 August 1999, pages 258 - 261, XP010356593
- SCHONING H.: 'Tamino - a DBMS designed for XML' PROCEEDINGS 17TH. INTERNATIONAL CONFERENCE ON DATA ENGINEERING vol. CONF.17, 02 April 2001, LOS ALAMITOS, CA : IEEE COMP. SOC, US, pages 149 - 154, XP010538056
- NAJORK M.; HEYDON A.: 'High-Performance Web Crawling' SRC RESEARCH REPORT 29 September 2001, PALO ALTO, CA, USA,
- GOLAND Y. ET AL: 'RFC 2518: HTTP Extensions for Distributed Authoring -- WEBDAV' IETF STANDARD February 1999, INTERNET ENGINEERING TASK FORCE, IETF, CH, XP015009179

## Description

### Field of the Invention

The present invention generally relates to electronic data processing, and more particularly, relates to method, computer program product and system for database management.

### Background of the Invention

People are still learning how to use effectively the flood of information available on the Internet and intranets. Current search engines yield very extensive results that may contain the needed information from sites all over the world. There are several main functions in a search engine: information gathering, indexing, categorization, and searching. Information gathering usually uses Web crawlers to send visited pages to the index engine. The index mechanism normally uses some form of inverted files and, when given a word, returns a list of references that contain the word. Categorization, or clustering, tries to categorize the pages according to some attributes, such as topics. The searching function allows the user to ask content-based queries and get ranked result sets.

XML is a meta language that allows the user to define a language for composing structured documents. With XML, the user can define any desired tags for structuring of documents.

Structured documents refer to documents that can have nested structures. Assuming structured documents will be abundant, in particular within intranets and extranets (between businesses), where documents are more likely to be regularly structured, there is a need for a search engine that understands document structures and allows a user to ask structured queries.

US patent 6,240,407 describes a prior art search engine for a large repository of structured documents by using indexing schemes that support structured queries and execute the queries without resorting to the structured documents. To create the structured index, a structured document in a database system, is parsed into at least one corresponding element, then abstracted using a predefined abstraction procedure to obtain a set of abstracted values. The set of abstracted values is stored in the index for execution of structured queries.

In the article "Ich bin wichtig", published in "C't Magazin für Computertechnik", No. 23, November 11, 1999, pp. 180-186, S. Lennartz describes an indexing method that allows one to index a structured document as a whole based on meta-tags if an indexing engine reacts with a meta-tag, which is not the case for all indexing engines.

The article Kasukawa T. et al., "A new method for maintaining semi-structured data described in XML", Comm. Comp. and Signal Proc., 1999 IEEE Pacific Rim Conf. On Victoria, BC, Canada 22-24 Aug., Piscataway, NJ, USA, IEEE, US, 22 Aug. 1999, pp. 258-261 discloses a method for maintaining a database of XML documents that can be queried for retrieval based on structure and content.

There is an ongoing need to improve intelligent indexing of structured documents for providing scalable search engines in a Web based Distributed Authoring and Versioning environment.

### Summary of the Invention

Hence, the technical problem of indexing structured documents in a Web based Distributed Authoring and Versioning (WebDAV) file system is solved by a method according to claim 1. Further embodiments of the invention are a computer system according to claim 11 and a computer program product according to claim 7.

When using an embodiment of the invention, wherein the WebDAV file system is implemented in a relational database management system (RDBMS), the embodiment of the invention can be used to index structured documents in a RDBMS. Further, one embodiment of the invention automatically performs versioned indexing (= indexing of multiple versions of a structured document).

By using different processors for running the WebDAV file system and for indexing the structured documents, negative effects, such as long response time of the WebDAV file system to a user request, are reduced.

By concurrently using multiple indexing processes for indexing a plurality of structured documents in the WebDAV file system, indexing is accelerated.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

FIG. 1 illustrates a simplified block diagram of a computer network system that can be used with an embodiment of the present invention;
FIG. 2 illustrates a portion of a memory of a computer storing software components that can be used in one embodiment of the invention;
FIG. 3 illustrates a computer for indexing structured documents according to an alternative embodiment of the invention;
FIG. 4 a locking mechanism for asynchronous indexing of structured documents according to one embodiment of the invention; and
FIG. 5 illustrates a simplified flow chart of a method that can be implemented with one embodiment of the invention.

### Detailed Description of the Invention

Wherever possible, the same reference numbers will be used throughout the drawings to refer to the same or like parts. For convenience of explanation a list of references is provided prior to the claims.

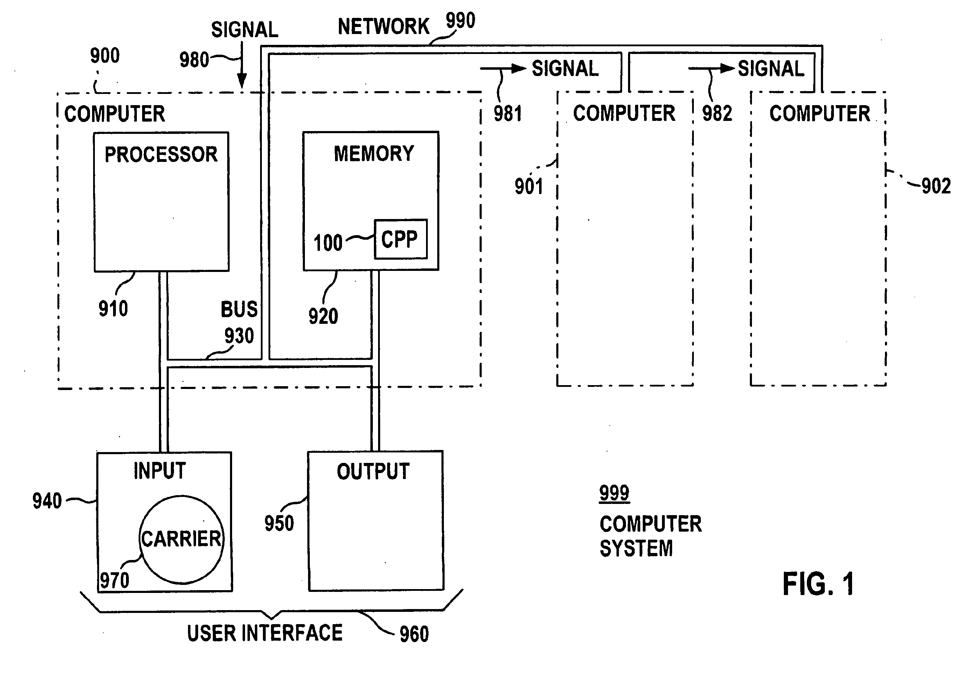

FIG. 1 illustrates a simplified block diagram of an exemplary computer system, that implements embodiments of the present invention. Computer system 999 includes computer 900 and has a plurality of further computers 901, 902 (or 90q, with q=0...Q-1, Q any number).

Computer 900 can be connected to further computers 901, 902 via computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, such as a hard disk, a floppy disk, or other magnetic disk, a tape, a cassette tape; (b) optical media, such as optical disk (CD-ROM, digital versatile disk - DVD); (c) semiconductor media, such as DRAM, SRAM, EPROM, EEPROM, memory stick, or by any other media, such as paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, such as Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.
Computer and program are closely related. As used hereinafter, phrases, such as "the computer provides" and "the program provides", are convenient abbreviation to express actions by a computer that is controlled by a program.

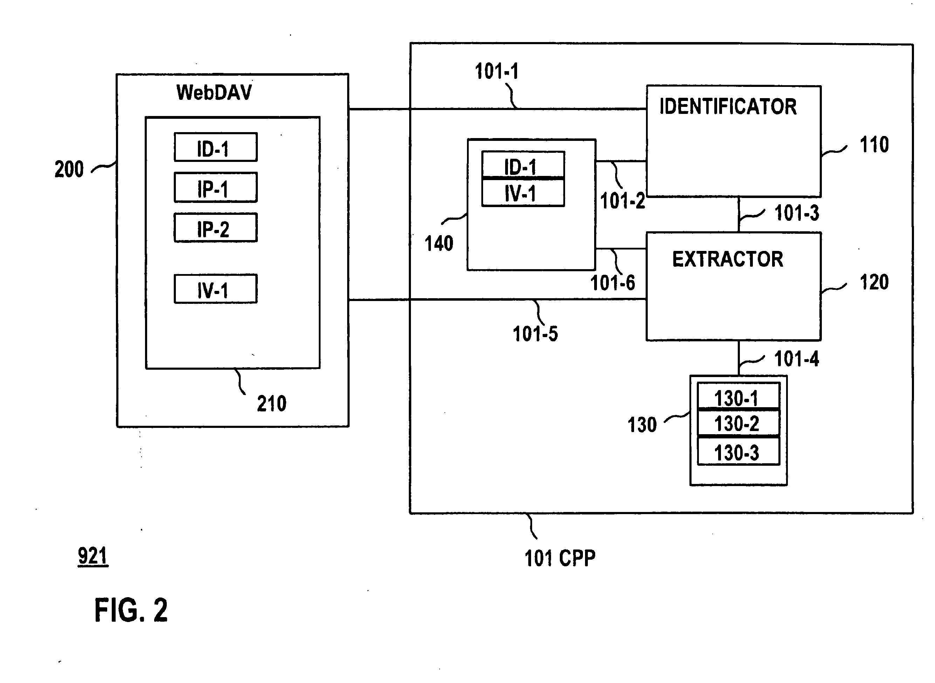

FIG. 2 illustrates a portion of memory 921 of computer 901 (cf. FIG. 1) storing software components that can be used in one embodiment of the invention. In another embodiment some or all of the software components are stored in another storage device of computer system 999 (cf. FIG. 1) or in a storage device that is connected to computer system 999 via a network (e.g. LAN, WAN, internet). The software components are now explained in detail.

Structured documents can be administrated by using Web based Distributed Authoring and Versioning (WebDAV). WebDAV is an extension of the HTTP-protocol. The HTTP-protocol, known by those skilled in the art, provides PUT and GET functions to upload/download structured documents to/from a web server. WebDAV provides further functions, such as
- MKCOL to make collections (directories),
- COPY and MOVE to copy, move and rename files and
- DELETE to delete files or collections.

These further methods allow to use a server that is supporting WebDAV as a file system, wherein WebDAV can be considered to be an access protocol to the file system. The implementation of the file system is independent from the access protocol. Collections and files are referred to as resources, hereinafter. For example, in one implementation, resources can be stored in the file system and further information, such as properties, can be stored in a relational database management system (RDBMS). In another implementation properties and resources all can be stored in a RDBMS.

WebDAV provides further functions, such as
- PROPFIND to list the properties of a resource, and
- PROPPATCH to set and change properties of resources through applications that make use of the resources.

Preferably, memory 921 stores a Web based Distributed Authoring and Versioning (WebDAV) file system 200 (referred to as file system 200, hereinafter). For example, file system 200 is stored in a portion of memory 921 that is organized as a relational database management system (RDBMS). File system 200 stores documents, such as structured document 210. Structured document 210 can be a markup-language document, such as an XML-, XHTML- or WML- document. Structured document 210 has at least one indexing-property, such as IP-1 and/or IP-2, and further has identifier ID-1.

Preferably, memory 921 also stores CPP 101 (not shown; cf. FIG. 1). CPP 101 includes the following components: identificator 110, extractor 120, pre-defined extraction-rule-set 130, index-value data structure 140 and interfaces 101-1 to 101-6.

In the example, identificator 110 identifies structured document 210 in file system 200 for indexing. For example, structured document 210 has at least one indexing-property IP-1 and/or IP-2. An indexing-property can be a document-type, a URL and/or a document-version. Identificator 110 can access indexing-properties IP-1, IP-2 of structured document 210 via interface 101-1. In one embodiment of the invention access to indexing-properties is implemented by using the function PROPFIND. In another example not covered by the claims accessing the indexing-properties can be implemented with a corresponding SQL-statement. Identificator 110 compares the indexing-properties of structured document 210 with reference indexing-properties. For example, the reference indexing-properties can be stored in a corresponding table (not shown) of a relational database system. Preferably, identificator 110 accesses the reference indexing-properties via interface 101-2. In another embodiment of the invention reference indexing-properties are stored, for example, in a specific property data structure. As known by those skilled in the art, index-value data structure 140 or the specific property data structure can be implemented as database tables in a RDBMS or as a further structured document, such as an XML file, that can be stored, for example, in file system 220. If identificator 110 identifies indexing-property IP-1 and/or IP-2 matching corresponding reference indexing-properties the structured document 210 is subject to indexing.

Extractor 120 extracts at least one index-value IV-1 from structured document 210 in accordance with pre-defined extraction-rule-set 130. Preferably, extractor 120 is connected to pre-defined extraction-rule-set 130 via interface 101-4 and to structured document 210 via interface 101-5. Pre-defined extraction-rule-set 130 includes a plurality of extraction rules 130-1, 130-2, 130-3.

The extraction rules 130-1, 130-2, 130-3 are XPath-expressions. The Xpath-specification of the W3C-consortion is known by those skilled in the art. Optionally, extraction-rule-set 130 can be stored in any storage device of computer system 999 or in any storage device linked to computer system 999 via a network. By applying extraction-rule-set 130 to structured document 210, the at least one index-value IV-1 is extracted. Extractor 120 then uses interface 101-6 to store extracted index-value IV-1 in index-value data structure 140 together with identifier ID-1 of structured document 210.

Those skilled in the art can design further embodiments of the invention with different components (e.g. only a single component for identificator 110 and extractor 120 or including extraction rule set 130 in extractor 120) and corresponding interfaces to come to an equivalent indexing system for structured documents in a WebDAV file system. These further embodiments are to considered to be within the scope of the present invention.

Optionally, once the indexing of structured document 210 is finalized, an index status of structured document 210 can be set to a value that indicates that the structured document has already been indexed. For example, the index status can be implemented as a property of structured document 210 that is set by using the function PROPPATCH.

In one example not covered by the claims identificator 110 and extractor 120 perform as described under FIG. 2 synchronously when a structured document gets created in file system 200 by using, for example, the function PUT. For example, a document-check-in application creates structured document 210 and substantially simultaneously identificator 110 checks if structured document 210 is subject to indexing. If so, extractor 120 extracts index values (e.g. IV-1) according to extraction rule set 130 and the extracted index values are stored in index-value data structure 140 together with identifier ID-1 of structured document 210.

According to the invention identificator 110 and extractor 120 perform as described under FIG. 2 asynchronously. In other words, structured document 210 already exists in file system 200. However, it is not yet indexed (for example indicated by the index status). Identificator 110 and extractor 120 are triggered by a specific event to perform according to the description of FIG. 2. The specific event can be a control signal launched by a user or automatically created by computer system 999, for example at a specific point in time or at a regular base to continuously scan file system 200 for new structured documents to be indexed. For example, when the trigger occurs at night when only a few users interact with computer system 999, a large number of structured documents (e.g. in a batch run known by those skilled in the art) can be processed without using CPU time that is needed by system processes for user interaction.

A specific implementation example of extracting a specific index-value from structured document 210 is now explained without the intention of limiting the scope of the invention.

Coding section 1 shows a simplified XML-example of structured document 210 having identifier ID-1="1111", that can be understood by those skilled in the art.

### Coding section 1:

```
 <?xml version="1.0" encoding="UTF-8"?>
  <department name="Development">
    <employeenumber>4</employeenumber>
    <employeelist>
     <Name>Peter</name>
     <year_of_birth>1966</year_of_birth>
     <Name>Michael</name>
     <year_of_birth>1968</year_of_birth>
     <Name>Ralf</name>
     <year_of_birth>1971</year_of_birth>
     <Name>Carolin</name>
     <year_of_birth>1984</year_of_birth>
    </employeelist>
  </department>
```

Extraction rule 130-1 corresponds to the following XPath expression:
XPath_Index_Name="/department/employeelist/name/text()"

In other words, extractor 120 extracts index-values (e.g. Peter, Michael, etc.) that are stored under the indexing-property name XPath_Index_Name in coding section 1. Table 1 shows entries that are stored in index-value data structure 140 when applying the Xpath-expression 130-1 to coding section 1 of structured document 210.

**Table 1: RDBMS example of index-value data structure 140 after having applied extraction rule 130-1.**

| identifier of structured document | name of indexing-property | value of indexing-property |
|---|---|---|
| ... | ... | ... |
| 1111 | XPath_Index_Name | Peter |
| 1111 | XPath_Index_Name | Michael |
| 1111 | XPath_Index_Name | Ralf |
| 1111 | XPath_Index_Name | Carolin |
| ... | ... | ... |

An example of a further extraction rule 130-2 is: XPath_Index_employeenumber="/department/employeenumber/ text()"

Applying further extraction rule 130-2 to coding section 1 adds another entry for indexing-property XPath_{_}Index_{_}employeenumber to index-value data structure 140, as shown in table 2.

**Table 2: RDBMS example of index-value data structure 140 after having applied extraction rule 130-2.**

| identifier of structured document | name of indexing-property | value of indexing-property |
|---|---|---|
| --- | --- | --- |
| 1111 | XPath_Index_Name | Peter |
| 1111 | XPath_Index_Name | Michael |
| 1111 | XPath_Index_Name | Ralf |
| 1111 | XPath_Index_Name | Carolin |
| 1111 | XPath_Index_employeenumber | 4 |
| --- | --- | --- |

Index-value data structure 140 can store index-values of a large number of structured documents. By using index-value data structure 140, structured documents can be identified via a corresponding query. For example, a query can request all structured documents that describe a department having more than 3 employees. In the example, the query at least identifies structured document 210 with identifier "1111".

By using a unique identifier for each version of a structured document or by using a version-property of the structured document, versioned indexing (= indexing of multiple versions of a structured document) is automatically provided when using a system that performs indexing according an embodiment of the invention.

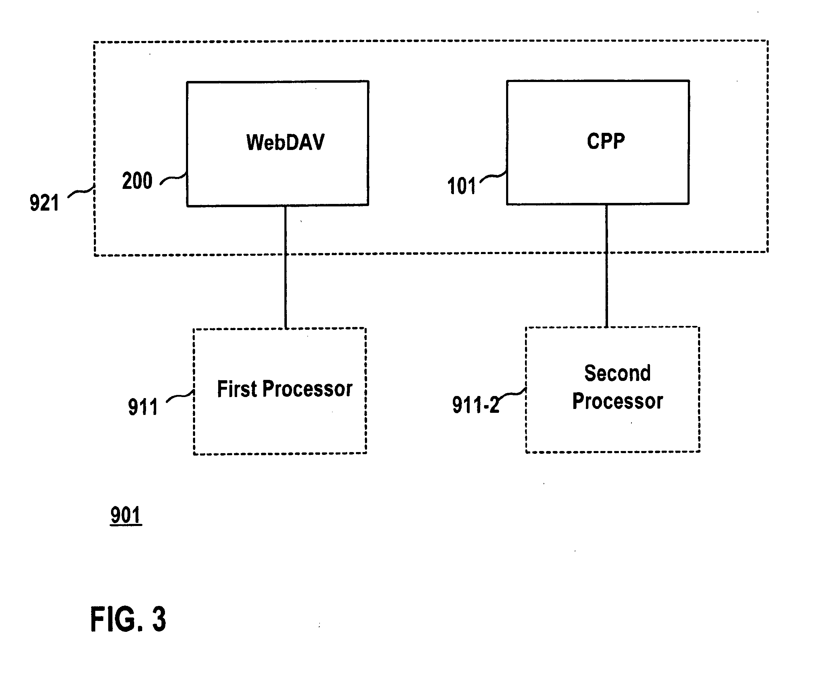

FIG. 3 illustrates computer 901 for indexing structured documents according to an alternative embodiment of the invention. Software components, such as file system 200 and CPP 101 are illustrated by solid frames. Hardware components, such as memory 921, first processor 911 and second processor 921-2 are illustrated by dashed frames.

In the alternative embodiment, file system 200 is operated by at least first processor 911. In other words, program instructions to run file system 200 are executed by first processor 911. CPP 100 is executed by at least second processor 911-2.

As known by those skilled in the art, each processor can be assigned to the corresponding system processes. Shared memory processors can be used to improve performance of indexing computer 901.

By using different processors for running the file system and for performing indexing of structured documents in the file system, the indexing has no impact on the performance of the file system (e.g. the system response time when a user wants to check in a document into the file system).

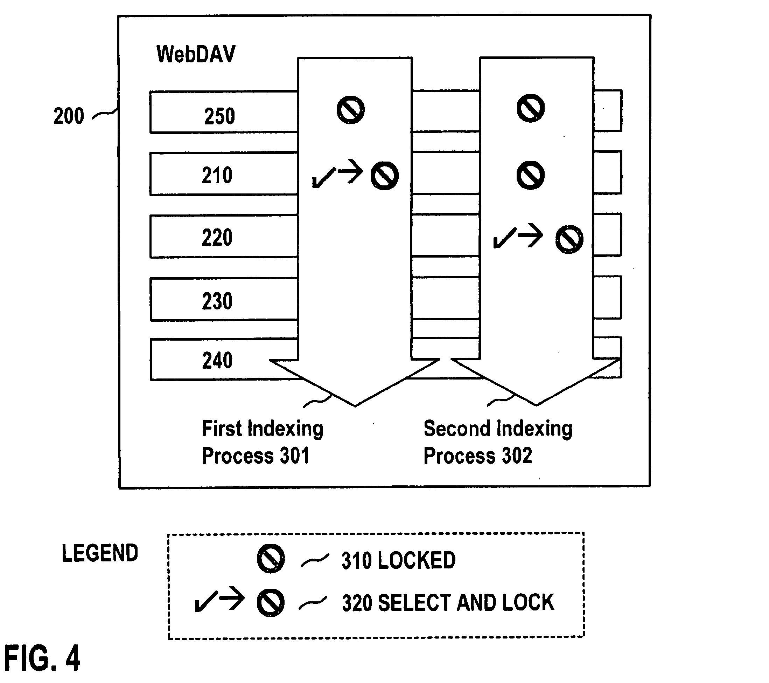

FIG. 4 illustrates a locking mechanism for asynchronous indexing of structured documents according to one embodiment of the invention.

To speed up indexing of structured document 210 and a plurality of further structured documents 220-250 stored in file system 200, multiple indexing processes are used. In the example, first indexing process 301 and second indexing process 302 (illustrated by arrows) are used. Sign 310 illustrates that a structured document is currently locked by another indexing process. Sign 320 illustrates that an indexing process arrives at a structured document that is subject to indexing but not yet indexed and not locked by another indexing process and that the structured document gets locked substantially simultaneously with being selected.

In the example, first indexing process 301 recognizes that structured document 250 is already locked by another indexing process (not shown). Therefore, first indexing process 301 skips the locked structured document and selects the next unlocked structured document 210 in file system 200. Substantially simultaneously with selecting structured document 210 first indexing process 301 locks structured document 210 while indexing the document. Second indexing process 302 recognizes that structured document 210 and 250 are already locked by other indexing processes and selects the next unlocked structured document 220. Substantially simultaneously with selecting structured document 220 second indexing process 302 locks structured document 220 while indexing the document.

By using the select and lock feature as described, waiting times for indexing processes (until a locked structured document gets unlocked again) can be eliminated.

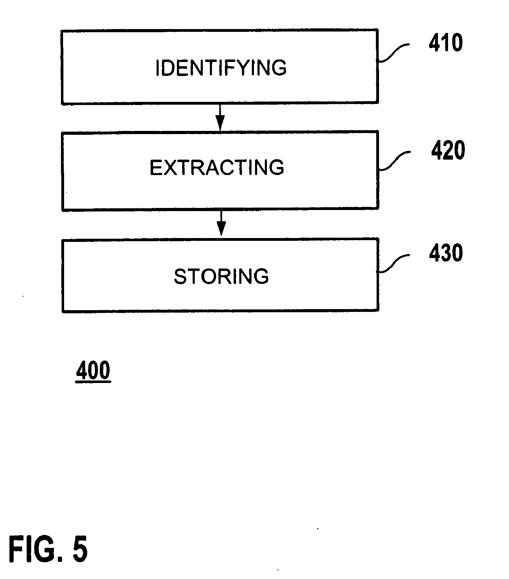

FIG. 5 illustrates a simplified flow chart of a method 400 for indexing structured documents in a computer storing a Web based Distributed Authoring and Versioning (WebDAV) file system 200. For example, method 400 can be executed by computer 901 (cf. FIG. 1) of computer system 999 (cf. FIG. 1). Computer program product 101 (cf. FIG. 1) includes instructions that cause at least a processor (e.g. 911, 911-2) of computer 901 to execute the steps of method 400. Computer program product 101 can be stored in data carrier 971 or carried by signal 981. Preferably, computer program product 101 is loaded into memory 921 of computer 901.

Method 400 includes the steps identifying 410, extracting 420 and storing 430. The steps are now explained in detail.

In the identifying step 410, CPP 101 identifies structured document 210 in the WebDAV file system 200 for indexing. Structured document 210 has at least one indexing-property IP-1, IP-2 and has identifier ID-1. For example, the at least one indexing-property IP-1 an/or IP-2 can be a document-type, a URL, a document-version, etc. Structured document 210 can be a markup-language document, such as an XML-, XHTML- and WML- document. In one embodiment of the invention, the WebDAV file system 200 is stored in a relational database management system.

In the extracting step 420, CPP 101 extracts at least one index-value IV-1 from structured document 210 in accordance with pre-defined extraction rule-set 130. The pre-defined extraction-rule-set 130 includes a plurality of XPath-expressions 130-1, 130-2, 130-3.

In the storing step 430, CPP 101 stores the at least one index-value IV-1 together with identifier ID-1 in index-value data structure 140. For example, index-value data structure 140 can be stored as a relational database table.

In a preferred embodiment of the invention WebDAV file system 200 is operated by at least first processor 911 and the identifying 410, extracting 420 and storing 430 steps are executed by at least second processor 911-2.

The identifying 410, extracting 420 and storing 430 steps are executed asynchronously upon creating structured document 210 in WebDAV file system 200. In this case, the identifying 410, extracting 420 and storing 430 steps can be executed for structured document 210 by first indexing process 301 and can be executed for a plurality of further structured documents 220, 230, 240, 250 of WebDAV file system 200 by at least second indexing process 302. By using multiple indexing processes, multiple structured documents can be indexed substantially simultaneously. Preferably, second indexing process 302 skips structured document 210 when it is locked by first indexing process 301 and selects an unlocked structured document 220 from the plurality of further structured documents 220, 230, 240, 250. By substantially simultaneously locking the unlocked structured document 220 second indexing process 302 prevents further indexing processes to access further structured document 220. Preferably, upon indexing a structured document, CPP 101 sets a corresponding indexing status of the document.

| **Reference** | **Description** |
|---|---|
| 101 | Computer program product |
| 101-1 to 101-6 | Interfaces |
| 110 | Identificator |
| 120 | Extractor |
| 130 | Extraction rule-set |
| 130-1 to 130-3 | Extraction rules |
| 140 | Index-value data structure |
| 200 | WebDAV file system |
| 210 - 250 | Structured documents |
| 301, 302 | Indexing processes |
| 400 | Method |
| 4xx | Method steps |
| 999 | Computer system |
| 900, 901, 902 | Computers |
| 910, 911, 911-2, 912 | Processors |
| 920, 921, 922 | Memories |
| 940 | Input device |
| 950 | Output device |
| 960 | User interface |
| 970 | Program carrier (computer readable device) |
| 980 | Program signal |

Reference numbers

## Claims

1. A method (400) for indexing structured documents in a computer (901) storing a Web based Distributed Authoring and Versioning (WebDAV) file system (200); the method (400) comprising the following steps:
identifying (410) a structured document (210) in the WebDAV file system (200) for indexing, wherein the structured document (210) has at least one indexing-property (IP-1, IP-2) and has an identifier (ID-1);
accessing said at least one indexing property (IP-1, IP-2) by using WebDAV function PROPFIND; and if said at least one indexing property (IP-1, IP-2) matches a corresponding reference indexing property subjecting the structured document to indexing;
extracting (420) at least one index-value (IV-1) from the structured document (210) in accordance with a pre-defined extraction rule-set (130) that comprises a plurality of XPath-expressions (130-1, 130-2, 130-3) by applying to the structured document (210) at least one of the XPath-expressions (130-1, 130-2, 130-3); and
storing (430) the at least one index-value (IV-1) with the identifier (ID-1) in an index-value data structure (140),
wherein:
the identifying (410), extracting (420) and storing (430) steps are executed asynchronously upon creating the structured document (210) in the WebDAV file system (200);
the identifying (410), extracting (420) and storing (430) steps are executed for the structured document (210) by a first indexing process (301) and are executed for a plurality of further structured documents (220, 230, 240, 250) of the WebDAV file system (200) by at least a second indexing process (302); and
the second indexing process (302) skips the structured document (210) that is locked by the first indexing process (301) and selects an unlocked structured document (220) from the plurality of further structured documents (220, 230, 240, 250) by substantially simultaneously locking the unlocked structured document (220).

2. The method (400) of claim 1, wherein the at least one indexing-property (IP-1, IP-2) is selected from the group of document-type, URL and document-version.

3. The method (400) of claims 1 or 2, wherein the structured document (210) is a markup-language document with a markup-language selected from the group of XML, XHTML and WML.

4. The method (400) of any of the claims 1 to 3, wherein the index-value data structure (140) is stored as a relational database table.

5. The method (400) of any of the claims 1 to 4, wherein the WebDAV file system (200) is stored in a relational database management system.

6. The method (400) of any of the claims 1 to 5, wherein the WebDAV file system (200) is operated by at least a first processor (911) and the identifying (410), extracting (420) and storing (430) steps are executed by at least a second processor (911-2).

7. A computer program product (101) comprising a plurality of instructions for indexing structured documents in a computer (901) that stores a Web based Distributed Authoring and Versioning (WebDAV) file system (200); the computer program product (101), when loaded into a memory (921) of a computer (900), causing at least one processor (911, 911-2) of the computer (901) to execute the following steps:
identifying (410) a structured document (210) in the WebDAV file system (200) for indexing, wherein the structured document (210) has at least one indexing-property (IP-1, IP-2) and has an identifier (ID-1);
accessing said at least one indexing property (IP-1, IP-2) by using WebDAV function PROPFIND; and if said at least one indexing property (IP-1, IP-2) matches a corresponding reference indexing property subjecting the structured document to indexing;
extracting (420) at least one index-value (IV-1) from the structured document (210) in accordance with a pre-defined extraction rule-set (130) that comprises a plurality of XPath-expressions (130-1, 130-2, 130-3) by applying to the structured document (210) at least one of the XPath-expressions (130-1, 130-2, 130-3); and
storing (430) the at least one index-value (IV-1) with the identifier (ID-1) in an index-value data structure (140),
wherein:
the identifying (410), extracting (420) and storing (430) steps are executed asynchronously upon creating the structured document (210) in the WebDAV file system (200);
the identifying (410), extracting (420) and storing (430) steps are executed for the structured document (210) by a first indexing process (301) and are executed for a plurality of further structured documents (220, 230, 240, 250) of the WebDAV file system (200) by at least a second indexing process (302); and
the second indexing process (302) skips the structured document (210) that is locked by the first indexing process (301) and selects an unlocked structured document (220) from the plurality of further structured documents (220, 230, 240, 250) by substantially simultaneously locking the unlocked structured document (220).

8. The computer program product (101) of claim 7, wherein the index-value data structure (140) is stored as a relational database table.

9. The computer program product (101) of claims 7 or 8, wherein the WebDAV file system (200) is stored in a relational database management system.

10. The computer program product (101) of any of the claims 7 to 9, wherein the WebDAV file system (200) is operated by at least a first processor (911) and the identifying (410), extracting (420) and storing (430) steps are executed by at least a second processor (911-2).

11. A computer (901 for indexing structured documents comprising:
a memory (921) storing a Web based Distributed Authoring and Versioning (WebDAV) file system (200) and a computer program (101) having an identificator (110) and an extractor (120); and
at least one processor (911, 911-2)configured to:
execute instructions of the identificator (110) to identify (410) a structured document (210) in the WebDAV file system (200) for indexing, wherein the structured document (210) has at least one indexing-property (IP-1, IP-2) and has an identifier (ID-1);
access said at least one indexing property (IP-1, IP-2) by using WebDAV function PROPFIND;
subject the structured document to indexing if said at least one indexing property (IP-1, IP-2) matches a corresponding reference indexing property; the at least one processor (911, 911-2) further configured to execute instructions of the extractor (120) to extract (420) at least one index-value (IV-1) from the structured document (210) in accordance with a pre-defined extraction rule-set (130) that comprises a plurality of XPath-expressions (130-1, 130-2, 130-3) by applying to the structured document (210) at least one of the XPath-expressions (130-1, 130-2, 130-3); the at least one index-value (IV-1) being stored (430) with the identifier (ID-1) in an index-value data structure (140)
wherein:
the identificator (110) and the extractor (120) are configured to perform indexing of the structured document (210) asynchronously upon the structured document (210) is created in the WebDAV file system (200);
the identificator (110) and the extractor (120) are configured to perform indexing of the structured document using a first indexing process (301) and perform indexing of a plurality of further structured documents (220, 230, 240, 250) of the WebDAV file system (200) by using at least a second indexing process (302) such that the second indexing process (302) skips the structured document (210) that is locked by the first indexing process (301) and selects an unlocked structured document (220) from the plurality of further structured documents (220, 230, 240, 250) by substantially simultaneously locking the unlocked structured document (220).

12. The computer (901) of claim 11, wherein the index-value data structure (140) is stored as a relational database table in the memory (921).

13. The computer (901) of any of the claims 11 to 12, wherein the WebDAV file system (200) is stored in a relational database management system in the memory (921).

14. The computer (901) of any of the claims 11 to 13, wherein the WebDAV file system (200) is operated by at least a first processor (911) and the identificator (110) and the extractor (120) are operated by at least a second processor (911-2).

## Patentansprüche

1. Verfahren (400) zum Indexieren strukturierter Dokumente in einem Computer (901), der ein Web-based-Distributed-Authoring-and-Versioning-(WebDAV-) Dateisystem (200) speichert; wobei das Verfahren (400) die folgenden Schritte umfasst:
Identifizieren (410) eines strukturierten Dokuments (210) in dem WebDAV-Dateisystem (200) zum Indexieren, wobei das strukturierte Dokument (210) zumindest eine Indexierungseigenschaft (IP-1, IP-2) hat und einen Identifikator bzw. eine Kennung (ID-1) hat;
Zugreifen auf die mindestens eine Indexierungseigenschaft (IP-1, IP-2) unter Verwendung der WebDAV-Funktion PROPFIND; und das strukturierte Dokument einem Indexieren unterziehen, wenn die zumindest eine Indexierungseigenschaft (IP-1, IP-2) einer entsprechenden Referenz-Indexierungseigenschaft entspricht;
Extrahieren (420) zumindest eines Indexwerts (IV-1) aus dem strukturierten Dokument (210) gemäß einem vordefinierten Extraktionsregelsatz (130), der eine Vielzahl von XPath-Ausdrücken (130-1, 130-2, 130-3) umfasst, indem zumindest einer der XPath-Ausdrücke (130-1, 130-2, 130-3) auf das strukturierte Dokument (210) angewendet wird; und
Speichern (430) des zumindest einen Indexwerts (IV-1) mit dem Identifikator (ID-1) in eine Indexwertdatenstruktur (140),
wobei:
die Identifzierungs- (410), Extraktions- (420) und Speicher- (430) Schritte nach dem Erzeugen des strukturierten Dokuments (210) in dem WebDAV-Dateisystem (200) asynchron ausgeführt werden;
die ldentifzierungs- (410), Extraktions- (420) und Speicher- (430) Schritte für das strukturierte Dokument (210) von einem ersten Indexierungsprozess (301) ausgeführt werden und für eine Vielzahl weiterer strukturierter Dokumente (220, 230, 240, 250) des WebDAV-Dateisystems (200) von zumindest einem zweiten Indexierungsprozess (302) ausgeführt werden; und
der zweite Indexierungsprozess (302) das strukturierte Dokument (210), das von dem ersten Indexierungsprozess (301) gesperrt ist, übergeht und ein ungesperrtes strukturiertes Dokument (220) aus der Vielzahl weiterer strukturierter Dokumente (220, 230, 240, 250) auswählt, indem er das ungesperrte strukturierte Dokument (220) gleichzeitig sperrt.

2. Verfahren (400) nach Anspruch 1, wobei die zumindest eine Indexierungseigenschaft (IP-1, IP-2) aus der Gruppe aus Dokumentart, URL und Dokumentversion ausgewählt wird.

3. Verfahren (400) nach Anspruch 1 oder 2, wobei das strukturierte Dokument (210) ein Mark-up-Language-Dokument mit einer Mark-up-Language ist, die aus der Gruppe aus XML, XHTML und WML ausgewählt wird.

4. Verfahren (400) nach einem der Ansprüche 1 bis 3, wobei die Indexwertdatenstruktur (140) als eine relationale Datenbank gespeichert wird.

5. Verfahren (400) nach einem der Ansprüche 1 bis 4, wobei das WebDAV-Dateisystem (200) in einem relationalen Datenbankverwaltungssystem gespeichert wird.

6. Verfahren (400) nach einem der Ansprüche 1 bis 5, wobei das WebDAV-Dateisystem (200) von zumindest einem ersten Prozessor (911) betrieben wird und die Identifzierungs- (410), Extraktions- (420) und Speicher- (430) Schritte von zumindest einem zweiten Prozessor (911-2) ausgeführt werden.

7. Computerprogrammprodukt (101), das eine Vielzahl von Anweisungen zum Indexieren strukturierter Dokumente in einem Computer (901) umfasst, der ein Web-based-Distributed-Authoring-and-Versioning- (WebDAV-) Dateisystem (200) speichert; wobei das Computerprogrammprodukt (101), wenn es in einen Speicher (921) eines Computers (900) geladen ist, zumindest einen Prozessor (911, 911-2) des Computers (901) veranlasst, die folgenden Schritte auszuführen:
Identifizieren (410) eines strukturierten Dokuments (210) in dem WebDAV-Dateisystem (200) zum Indexieren, wobei das strukturierte Dokument (210) zumindest eine Indexierungseigenschaft (IP-1, IP-2) hat und einen Identifikator (ID-1) hat;
Zugreifen auf die mindestens eine Indexierungseigenschaft (IP-1, IP-2) unter Verwendung der WebDAV-Funktion PROPFIND; und das strukturierte Dokument einem Indexieren unterziehen, wenn die zumindest eine Indexierungseigenschaft (IP-1, IP-2) einer entsprechenden Referenz-Indexierungseigenschaft entspricht;
Extrahieren (420) zumindest eines Indexwerts (IV-1) aus dem strukturierten Dokument (210) gemäß einem vordefinierten Extraktionsregelsatz (130), der eine Vielzahl von XPath-Ausdrücken (130-1, 130-2, 130-3) umfasst, indem zumindest einer der XPath-Ausdrücke (130-1, 130-2, 130-3) auf das strukturierte Dokument (210) angewendet wird; und
Speichern (430) des zumindest einen Indexwerts (IV-1) mit dem Identifikator (ID-1) in eine Indexwertdatenstruktur (140),
wobei:
die Identifzierungs- (410), Extraktions- (420) und Speicher- (430) Schritte nach dem Erzeugen des strukturierten Dokuments (210) in dem WebDAV-Dateisystem (200) asynchron ausgeführt werden;
die ldentifzierungs- (410), Extraktions- (420) und Speicher- (430) Schritte für das strukturierte Dokument (210) von einem ersten Indexierungsprozess (301) ausgeführt werden und für eine Vielzahl weiterer strukturierter Dokumente (220, 230, 240, 250) des WebDAV-Dateisystems (200) von zumindest einem zweiten Indexierungsprozess (302) ausgeführt werden; und
der zweite Indexierungsprozess (302) das strukturierte Dokument (210), das von dem ersten Indexierungsprozess (301) gesperrt ist, übergeht und ein ungesperrtes strukturiertes Dokument (220) aus der Vielzahl weiterer strukturierter Dokumente (220, 230, 240, 250) auswählt, indem er das ungesperrte strukturierte Dokument (220) gleichzeitig sperrt.

8. Computerprogrammprodukt (101) nach Anspruch 7, wobei die Indexwertdatenstruktur (140) als eine relationale Datenbank gespeichert ist.

9. Computerprogrammprodukt (101) nach den Ansprüchen 7 oder 8, wobei das WebDAV-Dateisystem (200) in einem relationalen Datenbankverwaltungssystem gespeichert ist.

10. Computerprogrammprodukt (101) nach einem der Ansprüche 7 bis 9, wobei das WebDAV-Dateisystem (200) von zumindest einem ersten Prozessor (911) betrieben wird und die Identifzierungs- (410), Extraktions- (420) und Speicher- (430) Schritte von zumindest einem zweiten Prozessor (911-2) ausgeführt werden.

11. Computer (901) zum Indexieren strukturierter Dokumente, der umfasst:
einen Speicher (921) zum Speichern eines Web-based-Distributed-Authoring-and-Versioning- (WebDAV-) Dateisystems (200) und ein Computerprogramm (101) mit einer Identifizierungseinrichtung (110) und einer Extraktionseinrichtung (120); und
zumindest einen Prozessor (911, 911-2), der konfiguriert ist, um
Anweisungen der Identifizierungseinrichtung (110) auszuführen, um ein strukturiertes Dokument (210) in dem WebDAV-Dateisystem (200) zum Indexieren zu identifizieren, wobei das strukturierte Dokument (210) zumindest eine Indexierungseigenschaft (IP-1, IP-2) hat und einen Identifikator (ID-1) hat;
unter Verwendung der WebDAV-Funktion PROPFIND auf zumindest eine Indexierungseigenschaft (IP-1, IP-2) zuzugreifen;
das strukturierte Dokument der Indexierung zu unterziehen, wenn die zumindest eine Indexierungseigenschaft (IP-1, IP-2) einer entsprechenden Referenzindexierungseigenschaft entspricht;
wobei der zumindest eine Prozessor (911-1, 911-2) ferner konfiguriert ist, um Anweisungen der Extraktionseinrichtung (120) auszuführen, um zumindest einen Indexwert (IV-1) aus dem strukturierten Dokument (210) gemäß einem vordefinierten Extraktionsregelsatz (130), der eine Vielzahl von XPath-Ausdrücken (130-1, 130-2, 130-3) umfasst, zu extrahieren (420), indem zumindest einer der XPath-Ausdrücke (130-1, 130-2, 130-3) auf das strukturierte Dokument (210) angewendet wird; wobei der zumindest eine Indexwert (IV-1) mit dem Identifikator (ID-1) in einer Indexwertdatenstruktur (140) gespeichert (430) wird,
wobei:
die Identifizierungseinrichtung (110) und die Extraktionseinrichtung (120) konfiguriert sind, um das Indexieren des strukturierten Dokuments, nachdem das strukturierte Dokument (210) in dem WebDAV-Dateisystem (200) erzeugt wurde, asynchron durchzuführen;
die Identifizierungseinrichtung (110) und die Extraktionseinrichtung (120) konfiguriert sind, um das Indexieren des strukturierten Dokuments unter Verwendung eines ersten Indexierungsprozesses (301) durchzuführen, und das Indexieren einer Vielzahl weiterer strukturierter Dokumente (220, 230, 240, 250) des WebDAV-Dateisystems (200) unter Verwendung zumindest eines zweiten Indexierungsprozesses (302) durchzuführen, so dass der zweite Indexierungsprozess (302) das strukturierte Dokument (210), das von dem ersten Indexierungsprozess (301) gesperrt ist, übergeht und ein ungesperrtes strukturiertes Dokument (220) aus der Vielzahl weiterer strukturierter Dokumente (220, 230, 240, 250) auswählt, indem es das ungesperrte strukturierte Dokument (220) gleichzeitig sperrt.

12. Computer (901) nach Anspruch 11, wobei die Indexwertdatenstruktur (140) als eine relationale Datenbank in dem Speicher (921) gespeichert ist.

13. Computer (901) nach einem der Ansprüche 11 bis 12, wobei das WebDAV-Dateisystem (200) in einem relationalen Datenbankverwaltungssystem in dem Speicher (921) gespeichert ist.

14. Computer (901) nach einem der Ansprüche 11 bis 13, wobei das WebDAV-Dateisystem (200) von zumindest einem ersten Prozessor (911) betrieben wird und die Identifizierungseinrichtung (110) und die Extraktionseinrichtung (120) von zumindest einem zweiten Prozessor (911-2) betrieben werden.

## Revendications

1. Méthode (400) pour l'indexage de documents structurés dans un ordinateur (901) qui mémorise un système de fichiers WebDAV (200) (Web based Distributed Authoring and Versioning) (création et rédaction distribuées basées sur le Web), la méthode (400) comprenant les étapes suivantes :
l'identification (410) d'un document structuré (210) dans le système de fichiers WebDAV (200) pour l'indexage, opération pendant laquelle le document structuré (210) a au moins une propriété d'indexage (IP-1, IP-2) et a un identificateur (ID-1) ;
l'accès à ladite au moins une propriété d'indexage (IP-1, IP-2) en utilisant la fonction PROPFIND du WebDAV et si ladite au moins une propriété d'indexage (IP-1, IP-2) concorde avec une propriété d'indexage de référence correspondante qui soumet le document structuré à l' indexage ;
l'extraction (420) d'au moins une valeur indicielle (IV-1) depuis le document structuré (210) en conformité avec un set de règles d'extraction pré-définies (130), lequel comprend une pluralité d'expressions XPath (130-1, 130-2, 130-3) en appliquant au moins une des expressions XPath (130-1, 130-2, 130-3) sur le document structuré (210) ; et
la mémorisation (430) de la au moins une valeur indicielle (IV-1) avec l'identificateur (ID-1) dans une structure de données des valeurs indicielles (140) ;
dans laquelle :
les étapes d'identification (410), d'extraction (420) et de mémorisation (430) sont exécutées de manière asynchrone suite à la création du document structuré (210) dans le système de fichiers WebDAV (200) ;
les étapes d'identification (410), d'extraction (420) et de mémorisation (430) sont exécutées pour le document structuré (210) par un premier processus d'indexage (301) et sont exécutées pour une pluralité de documents structurés (220, 230, 240, 250) du système de fichiers WebDAV (200) par au moins un second processus d'indexage (302) ; et
le second processus d'indexage (302) saute le document structuré (210) qui est verrouillé par le premier processus d'indexage (301) et sélectionne un document structuré non verrouillé (220) parmi la pluralité des autres documents structurés (220, 230, 240, 250) en verrouillant d'une manière sensiblement simultanée le document structuré non verrouillé (220).

2. Méthode (400) selon la revendication 1, dans laquelle la au moins une propriété d'indexage (IP-1, IP-2) est sélectionnée parmi le groupe formé par le type de document, l'URL et la version de document.

3. Méthode (400) selon l'une ou l'autre des revendications 1 et 2, dans laquelle le document structuré (210) est un document à langage de balisage comportant un langage de balisage sélectionné parmi le groupe formé par XML, XHTML et WML.

4. Méthode (400) selon l'une quelconque des revendications 1 à 3, dans laquelle la structure de données des valeurs indicielles (140) est mémorisée comme une table de base de données relationnelle.

5. Méthode (400) selon l'une quelconque des revendications 1 à 4, dans laquelle le système de fichiers WebDAV (200) est mémorisé dans un système de gestion de base de données relationnelle.

6. Méthode (400) selon l'une quelconque des revendications 1 à 5, dans laquelle le système de fichiers WebDAV (200) est mis en service par au moins un premier processeur (911) et dans laquelle les étapes d'identification (410), d'extraction (420) et de mémorisation (430) sont exécutées par au moins un second processeur (911-2).

7. Produit de programme informatique (101) comprenant une pluralité d'instructions pour l'indexage de documents structurés dans un ordinateur (901) qui mémorise un système de fichiers WebDAV (200) (Web based D'istributed Authoring and Versioning) (création et rédaction distribuées basées sur le Web), le produit de programme informatique (101), lorsqu'il est chargé dans une mémoire (921) d'un ordinateur (901), provoquant qu'au moins un processeur (911, 911-2) exécute les étapes suivantes :
l'identification (410) d'un document structuré (210) dans le système de fichiers WebDAV (200) pour l'indexage, opération pendant laquelle le document structuré (210) a au moins une propriété d'indexage (IP-1, IP-2) et a un identificateur (ID-1) ;
l'accès à ladite au moins une propriété d'indexage (IP-1, IP-2) en utilisant la fonction PROPFIND du WebDAV et si ladite au moins une propriété d'indexage (IP-1, IP-2) concorde avec une propriété d'indexage de référence correspondante qui soumet le document structuré à l'indexage ;
l'extraction (420) d'au moins une valeur indicielle (IV-1) depuis le document structuré (210) en conformité avec un set de règles d'extraction pré-définies (130), lequel comprend une pluralité d'expressions XPath (130-1, 130-2, 130-3) en appliquant au moins une des expressions XPath (130-1, 130-2, 130-3) sur le document structuré (210) ; et
la mémorisation (430) de la au moins une valeur indicielle (IV-1) avec l'identificateur (ID-1) dans une structure de données des valeurs indicielles (140) ;
dans lequel :
les étapes d'identification (410), d'extraction (420) et de mémorisation (430) sont exécutées de manière asynchrone suite à la création du document structuré (210) dans le système de fichiers WebDAV (200) ;
les étapes d'identification (410), d'extraction (420) et de mémorisation (430) sont exécutées pour le document structuré (210) par un premier processus d'indexage (301) et sont exécutées pour une pluralité de documents structurés (220, 230, 240, 250) du système de fichiers WebDAV (200) par au moins un second processus d'indexage (302) ; et
le second processus d'indexage (302) saute le document structuré (210) qui est verrouillé par le premier processus d'indexage (301) et sélectionne un document structuré non verrouillé (220) parmi la pluralité des autres documents structurés (220, 230, 240, 250) en verrouillant d'une manière sensiblement simultanée le document structuré non verrouillé (220).

8. Produit de programme informatique (101) selon la revendication 7, dans lequel la structure de données des valeurs indicielles (140) est mémorisée comme une table de base de données relationnelle.

9. Produit de programme informatique (101) selon l'une ou l'autre des revendications 7 et 8, dans lequel le système de fichiers WebDAV (200) est mémorisé dans un système de gestion de base de données relationnelle.

10. Produit de programme informatique (101) selon l'une quelconque des revendications 7 à 9, dans lequel le système de fichiers WebDAV (200) est mis en service par au moins un premier processeur (911) et dans lequel les étapes d'identification (410), d'extraction (420) et de mémorisation (430) sont exécutées par au moins un second processeur (911-2).

11. Ordinateur (901) pour l'indexage de documents structurés comprenant :
une mémoire (921) qui mémorise un système de fichiers WebDAV (200) (Web based Distributed Authoring and Versioning) (création et rédaction distribuées basées sur le Web), et un produit de programme informatique (101) qui a un identificateur (110) et un extracteur (120) ; et
au moins un processeur (911, 911-2) configuré pour :
exécuter des instructions de l'identificateur (110) pour l'identification (410) d'un document structuré (210) dans le système de fichiers WebDAV (200) pour l'indexage, opération pendant laquelle le document structuré (210) a au moins une propriété d'indexage (IP-1, IP-2) et un identificateur (ID-1) ;
accéder à ladite au moins une propriété d'indexage (IP-1, IP-2) en utilisant la fonction PROPFIND du WebDAV ;
soumettre le document structuré à l'indexage si ladite au moins une propriété d'indexage (IP-1, IP-2) concorde avec une propriété d'indexage de référence correspondante ;
le au moins un processeur (911, 911-2) étant en outre configuré pour exécuter des instructions de l'extracteur (120) pour l'extraction (420) d'au moins une valeur indicielle (IV-1) depuis le document structuré (210) en conformité avec un set de règles d'extraction pré-définies (130), lequel comprend une pluralité d'expressions XPath (130-1, 130-2, 130-3) en appliquant au moins une des expressions XPath (130-1, 130-2, 130-3) sur le document structuré (210), la au moins une valeur indicielle (IV-1) étant mémorisée (430) avec l'identificateur (ID-1) dans une structure de données des valeurs indicielles (140).
dans lequel :
l'identificateur (110) et l'extracteur (120) sont configurés pour accomplir l'indexage du document structuré en utilisant un premier processus d'indexage (301) et pour accomplir l'indexage d'une pluralité de documents structurés (220, 230, 240, 250) du système de fichiers WebDAV (200) en utilisant au moins un second processus d'indexage (302) de telle sorte que le second processus d'indexage (302) saute le document structuré (210) qui est verrouillé par le premier processus d'indexage (301) et sélectionne un document structuré non verrouillé (220) parmi la pluralité des autres documents structurés (220, 230, 240, 250) en verrouillant d'une manière sensiblement simultanée le document structuré non verrouillé (220).

12. Ordinateur (901) selon la revendication 11, dans lequel la structure de données des valeurs indicielles (140) est mémorisée dans la mémoire (921) comme une table de base de données relationnelle.

13. Ordinateur (901) selon l'une quelconque des revendications 11 à 12, dans lequel le système de fichiers WebDAV (200) est mémorisé dans la mémoire (921) dans un système de gestion de base de données relationnelle.

14. Ordinateur (901) selon l'une quelconque des revendications 11 à 13, dans lequel le système de fichiers WebDAV (200) est mis en service par au moins un premier processeur (911) et dans lequel l'identificateur (110) et l'extracteur (120) sont mis en service par au moins un second processeur (911-2).
